# EUROPEAN PATENT APPLICATION

(11) **EP 4 520 293 A1**
(43) Date of publication of application: **12.03.2025**
(21) Application number: 23195690.5
(22) Date of filing: 06.09.2023
(51) Int. Cl.: A61C 17/20, A61C 17/22, A61C 17/32

(54) **METHOD AND ELECTRONIC CONTROL UNIT FOR ULTRASONIC CLEANING**

(71) Applicant: epitome GmbH, 1100 Wien (AT)
(72) Inventor: WALLNER, Dominik, 1100 Wien (AT); SHMELEV, Andrei, 1050 Wien (AT); PICHLER, Bernhard Moritz, 1030 Wien (AT); WEISS-BOUSLAMA, 3423 St. Andrä-Wördern (AT)
(74) Representative: WSL Patentanwälte Partnerschaft mbB

(57) **Abstract**

A method for ultrasonic cleaning at least one surface (sc) to be cleaned, comprising the following steps:
- providing a cleaning fluid (10) in at least one processing volume (2), wherein the cleaning fluid contacts the surface to be cleaned, and wherein microbubbles (12) are contained and/or created in the cleaning fluid in the at least one processing volume;
- generating and applying ultrasound to the cleaning fluid in the processing volume, wherein the ultrasound application comprises a first sequence of pulses comprising at least one first pulse (p1) with at least one first mean intensity and at least one second pulse (p2), which is applied after the first pulse and which has at least one second mean intensity, wherein the first mean intensity is configured to move the microbubbles in the cleaning fluid toward the surface to be cleaned, and wherein the second mean intensity is greater than the first mean intensity and is configured to generate microbubble induced shear stresses.

## Description

The present invention relates to a method for ultrasonic cleaning at least one surface to be cleaned.

Furthermore, the present invention relates to an electronic control unit for use in a method for ultrasonic cleaning at least one surface to be cleaned.

It is known that ultrasound can be used for cleaning surfaces of a wide range of parts having different shapes and/or sizes and being made of different materials. Particularly, ultrasonic cleaning is suitable for cleaning surfaces of small intricate parts.

Moreover, ultrasound is also used for cleaning a user's teeth, cf. US 2011/0159461 A1 relating to a power toothbrush having a toothbrush head comprising not only bristles, but also a waveguide operatively connected to an ultrasonic transducer. Bubbles that are generated in a dental fluid by a sonic motion of the bristles are acted upon by the ultrasound in that the bubbles are resonated. The corresponding bubble oscillations foster plaque removal. Even though good cleaning results can be achieved theoretically, in practice it is difficult to achieve good cleaning results in a reproducible way. In ultrasound cleaning of inanimate objects in a fluid the effect of inertial (or transient) cavitation is used. The latter refers to the formation of small vapour-filled cavities, in places of the fluid where the pressure is relatively low due to the ultrasound wave with a sufficiently high intensity acting upon the fluid as pressure wave. When subjected to higher pressure (by the inverted pressure wave), these cavities collapse and locally generate very high temperatures (of up to several thousand Kelvin) and pressures (of up to about a thousand bar), which can break up the adhesion between dirt particles and a surface to be cleaned. However, the surface to be cleaned can suffer damage due to the high temperatures and pressures, which might be unacceptable. Particularly, the latter is usually true when it comes to the cleaning of teeth of a user. This means that increasing the ultrasound intensity for achieving better tooth cleaning results is hardly possible.

Generally, ultrasound intensities that are low enough to prevent damage often do not provide for a sufficient cleaning performance.

It is thus the objective of the present invention to provide for a method for ultrasonic cleaning which overcomes the above-mentioned disadvantages and which preferably allows for a higher cleaning efficiency and, more preferably, for simultaneously avoiding damage issues.

In order to solve the above-mentioned problems, according to the invention a method for ultrasonic cleaning at least one surface to be cleaned is provided, the method comprising the following steps:
- providing a cleaning fluid in at least one processing volume, wherein the cleaning fluid contacts the surface to be cleaned, and wherein microbubbles are contained and/or created in the cleaning fluid in the at least one processing volume; - generating ultrasound, preferably by means of at least one transducer, and applying the ultrasound to the cleaning fluid in the processing volume, wherein the ultrasound application comprises a first sequence of pulses comprising at least one first pulse with at least one first mean intensity and at least one second pulse, which
   is applied after the first pulse and which has at least one second mean intensity,
   wherein the first mean intensity is configured to create the microbubbles in the cleaning fluid and/or to move the microbubbles in the cleaning fluid toward the surface to be
   cleaned, and wherein the second mean intensity is greater than the first mean intensity and is configured to generate microbubble induced shear stresses, in order to produce a cleansing action of the microbubbles on the surface to be cleaned.

The method can be used in different applications, wherein the surface to be cleaned can be an almost arbitrarily chosen surface, e.g. at least a section of a tooth surface or at least a section of a (semiconductor) wafer surface.

The at least one processing volume can be confined and/or defined and/or limited by one or more elements separate from the surface to be cleaned. Particularly, the processing volume can be thoroughly confined/defined/limited by a receptacle, in which receptacle the cleaning fluid is provided at first, and the surface to be cleaned and a member comprising the surface
to be cleaned, respectively, is then put into the cleaning fluid in the processing volume of the receptacle. For example, a waver with a surface to be cleaned is put into a cleaning fluid bath in the processing volume of a trough, wherein the cleaning fluid contacts the surface to be cleaned.

Alternatively, the at least one processing volume can also be confined and/or defined and/or limited at least in sections by the surface to be cleaned. Particularly, the surface to be cleaned can form a part, more particularly an inner wall, of a receptacle into which the cleaning fluid is introduced. For example, a section of a tooth of a user plus another element form together a receptacle confining the processing volume, wherein the tooth section contains the surface to be cleaned.

When a cleaning fluid, particularly in the form of a dentifrice fluid, is introduced into said processing volume, the cleaning fluid contacts the surface to be cleaned.

The microbubbles can be deliberately contained in the cleaning fluid, i.e. already before the cleaning fluid enters the at least one processing volume, and/or can be created when the
cleaning fluid is in the at least one processing volume. The latter can be accomplished, for example, using an oversaturated liquid (also referred to as supersaturated liquid) as cleaning fluid, wherein the microbubbles are created by the reduced pressure in the ultrasonic field, i.e. while the ultrasound is applied to the cleaning fluid in the processing volume.

One example for such a cleaning fluid is a liquid, particularly a water-based liquid, oversaturated with COz or other gases like Argon, N₂, O₂, SF₆, fluorinated hydrocarbons, or other quasi insoluble gases, wherein gas (in the mentioned examples COz, Ar, N₂, O₂, SF₆, fluorinated hydrocarbons, or other quasi insoluble gases) microbubbles can be created, e.g. by the at least one first pulse, as explicitly mentioned above. Note, however, that microbubbles can also be created additionally or alternatively by the second pulse or by another ultrasound dedicated to the microbubble production.

Another (known) way of producing microbubbles - before introduction of the cleaning fluid into the processing volume or while the cleaning fluid is in the processing volume - makes use of a Venturi nozzle introducing gas into the cleaning fluid, wherein the so-created bubbles can be further refined in their size, cf. US 7913984 B2.

Generally, the microbubbles can be produced continuously or intermittently.

The microbubbles in the cleaning fluid typically have a diameter in the range of 0,5 µm to 100 µm, preferably in the range of 1 µm to 50 µm, more preferably in the range of 2 µm to 40 µm. The ultrasound frequency can be appropriately adjusted to said microbubble sizes and vice versa (the higher the frequency, the smaller the microbubble size). Moreover, the mentioned range of microbubble sizes or diameters can account for different kind of biofilm / plaque / adhering particles to be removed. "Adhering particles" generally refers to dirt particles, particularly to bacteria colonies, wherein the latter can have different sizes and may grow to form a biofilm. Hence, the specified range of microbubble sizes can be used to remove dirt particles and bacteria or bacteria lumps/colonies, respectively, with different sizes.

One example, which is particularly suited for (semiconductor) wafer cleaning, comprises ultrasound frequencies of the first and second pulses in the range from 700 Hz to 50 Hz, preferably 100-500 Hz, more preferably 250-35 Hz and microbubble sizes in the range from 1 µm to 5 µm.

Preferably, at least a certain amount of the microbubbles, particularly at least 80% of the volume of all microbubbles, is produced within said size ranges, particularly within a size range of 1 µm to 50 µm, while the remaining microbubbles can be outside said size ranges (i.e. with smaller and/or larger diameters).

In general, the ultrasound is generated and applied by means of at least one ultrasound emitter. The latter can be, e.g. a transducer or a waveguide coupled to a transducer.

The ultrasound itself is not necessarily directed toward the surface to be cleaned. Microbubbles can be moved also to surface parts, e.g. into interdental areas, that are not directly observable along the viewing direction from the ultrasound source.

It is conceivable that a first ultrasound emitter is used for generating both the first and second pulses and a second ultrasound emitter is used for applying also the first and second pulses to the cleaning fluid, but from a different location. In this case it is imaginable that the first ultrasound emitter is applying the at least one first pulse simultaneously with the second ultrasound emitter applying the at least one second pulse and vice versa.

A pulse is characterized by its duration for a certain (rather short) amount of time.

The mean intensity is the mean value of the intensity averaged over the duration of the pulse. Generally, the actual intensity does not need to be constant over the duration of the pulse, i.e. a ramp or an amplitude modulation is possible, for example.

Application of the at least one second pulse after the at least one first pulse does not necessarily mean that the second pulse follows the first pulse immediately. For example, there might be a, preferably short, pause and/or at least one further pulse in-between. Said further pulse could have a mean intensity too low to generate bubble movement or too high for generating the microbubble-induced shear stresses, for example.

Several first pulses - particularly with different first mean intensities, each configured for generating microbubble creation and/or movement - and/or several second pulses - particularly with different second mean intensities, each configured for generating microbubble-induced shear stresses - are possible.

It turns out that by way of this specific kind of ultrasound application the cleaning performance can be dramatically increased. The reason for the increased cleaning efficiency is that with the first pulse the microbubbles are specifically moved to the at least one surface to be cleaned, wherein the first pulse has the lower mean intensity, which is sufficiently high to move the microbubbles, but low enough not to produce the cleansing action (although a cleansing action cannot be completely excluded). This means that the microbubbles stay in the dentifrice/cleaning fluid during the first pulse (in other words the first pulse does not remove the microbubbles from the dentifrice/cleaning fluid). Note that the movement of the microbubbles includes a movement to a node of the ultrasound wave close to the surface to be cleaned where microbubbles can gather, can form clusters, can agglomerate or can sometimes even coalesce.

When the second pulse, which has the higher mean intensity, acts on the microbubbles, the microbubbles predominantly are in the region where the cleansing action is needed - and not elsewhere in the dentifrice/cleaning fluid, where no or only little cleansing action on the at least one surface to be cleaned can be effected.

Without the at least one first pulse the microbubbles would be distributed anywhere in the cleaning fluid in the processing volume and not specifically at the surface to be cleaned, i.e. cleaning is highly improved compared to having only the at least one second pulse.

The microbubble-induced shear stresses - at the desired position due to the first pulse
- are generated due to the second mean intensity of the second pulse and stem from at least the following effects:
- The ultrasound generates acoustic streaming in the dentifrice/cleaning fluid, the strength of which is according to the second mean intensity sufficiently great
   to wash the microbubbles away over the (preferably
   dental) surface to be cleaned, thereby detaching biofilm / plaque / adhering particles from said surface.
- The microbubbles are oscillated by the second pulse. These oscillations cause the fluid close to the microbubbles to
   move in a way which is known as "microstreaming", wherein
the shear forces associated with said microstreaming generate a scrubbing action displacing or loosening biofilm/plaque and other adhering particles from the (preferably dental) surface to be cleaned.
- The microbubbles are collapsed, wherein pressure gradients
are generated and microjets of the surrounding liquid fill the void which leads to shear forces that disrupt unwanted coatings / contaminants from the surface to be cleaned, allowing for, e.g. the disruption of biofilm /
plaque / adhering particles at the (preferably dental)
surface to be cleaned.

As mentioned before, inertial cavitation can be excluded essentially, while non-inertial cavitation can account for the above-mentioned microbubble-induced shear stresses.

In principle, the first pulse should be sufficiently long, in order to enable movement of the microbubbles to the surface to be cleaned.

Particularly, the length or duration of the first pulse can be dependent or tuned on or to the distance between the emitter of the first pulse (typically a transducer) and the surface to be cleaned (e.g. belonging to a tooth).

In a preferred embodiment of the method according to the present invention, it is provided that the first pulse has a first duration and the second pulse has a second duration, wherein the second duration is smaller than the first duration. It turns out that in this way particularly good cleansing results can be achieved while ensuring integrity of the surface to be cleaned. The latter holds because the surface to be cleaned is exposed to high intensity ultrasound only a relatively short time. However, in this relatively short time, a large number of microbubbles is in the vicinity of the surface to be cleaned and can thus perform said cleansing action, because the large number of microbubbles has been given enough time to be moved by the first pulse toward the surface to be cleaned.

For example, the first duration can be in the range of 150 ms to 200 ms and the second duration can be in the range of 10 ms to 50 ms. Accordingly, a first duration of 150 ms and a second duration of 50 ms results in a total duration of the first sequence of 200 ms if the first sequence contains only one first pulse lasting for the first duration and one second pulse lasting for the second duration and following the first pulse immediately. Of course, this first sequence can be repeated (i.e. at least one second sequence is identical to the first sequence). Said repetition can be done immediately after the second pulse and can be done several times or continuously, e.g. for the whole cleaning process (taking 20 s or 10 s to 30 s, for example) with five (first) sequences per second.

In order to have an optimum balance between the transport of a huge number of microbubbles toward the surface to be cleaned on the one hand and the cleansing action of the microbubbles effected by the second pulse on the other hand, it is provided in a particularly preferred embodiment of the method according to the present invention that the second duration is in the range from 50% to 75% of the first duration.

In a preferred embodiment of the method according to the present invention, it is provided that the first pulse has a first duration and the second pulse has a second duration, wherein the sum of the first duration and the second duration is in the range from 15 ms to 35 ms, preferably from 20 ms to 30 ms. Also in this embodiment excellent cleansing results are achieved while simultaneously the integrity of the surface to
be cleaned can be ensured, since the time during which the surface to be cleaned is exposed to high intensity ultrasound can be kept sufficiently short.

Note, however, that in this case the second duration does not have to be smaller than the first duration, but can be equal 20 to or greater than the first duration too.

For the sake of completeness it is noted that other durations of the first and second pulses are possible, too. Preferably, the duration of the at least one first pulse can vary from 5 ms to 50 ms, and the duration of the at least one second pulse can vary from 10 ms to 100 ms. If there is only one first pulse immediately followed by only one second pulse, this results in a total length from 15 ms to 150 ms.

More preferably, the duration of the at least one first pulse can vary from 5 ms to 20 ms, and the duration of the at least one second pulse can vary from 10 ms to 50 ms. If there is only one first pulse immediately followed by only one second pulse, this results in a total length from 15 ms to 70 ms. One example actually falling into these intervals has a duration of the first pulse of about 5 ms and a duration of the second pulse of about 50 ms, which is particularly well suited for the cleaning of (semiconductor) wafers.

As mentioned above, there can be a pause and/or at least one further pulse in-between the at least one first pulse and the at least one second pulse. However, in a preferred embodiment of the method according to the present invention, it is provided that the second pulse follows the first pulse immediately. Of course "immediately" must not be understood in a purely mathematical sense, but with respect to typical propagation times of the ultrasound in the cleaning fluid on the one hand and with the period (inverse of the frequency) of the ultrasound on the other hand. The meant short intervals or zero intervals between the first and second pulse have the advantage that the microbubbles do not travel much further, i.e. possibly away again from the surface to be cleaned, due to a possible volume flow of the cleaning fluid. Hence, the microbubbles can exercise their cleansing action very precisely positioned at the surface to be cleaned.

In a preferred embodiment of the method according to the present invention, it is provided that the at least one first pulse has at least one first frequency, the at least one second pulse has at least one second frequency, wherein the first and second frequencies differ. In order to easily generate different frequencies with a single transducer, different resonant oscillation modes of a piezo element of the transducer can be deployed. For example, for the at least one first pulse a radial mode can be used and for the at least one second pulse a thickness mode can be used, with said modes having different frequencies. E.g. a radial mode with about 275 kHz and a thickness mode with about 700 kHz can be used, with these frequencies resulting from correspondingly different dimensions of the piezo element in a radial direction (larger dimension; radial mode has a waveform in this direction) and an axial direction along which the thickness of the piezo element is measured (smaller dimension; thickness mode has a waveform in this direction).

For the sake of completeness it is noted that, of course, also different frequencies, i.e. higher or lower frequencies, that, moreover, can be closer to - or further apart from - each other, are possible.

Another example would be to use different harmonics of resonant oscillations of a piezo element of a transducer.

It is conceivable to use different ultrasound emitters and transducers, respectively, for the generation and application of the at least one first pulse and of the at least one second pulse. Accordingly, in a preferred embodiment of the method according to the present invention, it is provided that different transducers are used for generating and applying the at least one first pulse on the one hand and for generating and applying the at least one second pulse on the other hand. In principle, this allows for a cheap realization, since each transducer does not have to be able to work in a broad range of frequencies and can thus be kept simple.

Generally, the deployment of different transducers for the first pulse on the one hand and for the second pulse on the other hand can be done at least once during the whole first sequence of pulses. Preferably, the different transducers are always deployed for the first and second pulses of the first sequence of pulses.

In order to clean particularly thoroughly, several sequences with first and second pulses can be applied consecutively.

Accordingly, in a preferred embodiment of the method according to the present invention, it is provided that after the first sequence of pulses at least one second sequence of pulses is generated and applied to the cleaning fluid in the processing volume, wherein the at least one second sequence of pulses comprises the at least one first pulse and the at least one second pulse after the first pulse. The second sequence of pulses can follow the first sequence of pulses immediately, or there might be a, preferably short, period of time between the second pulse of the first sequence and the first pulse of the second sequence.

Naturally, what is written above for the first and second pulses of the first sequence of pulses also holds for the first and second pulses of the second sequence of pulses. In other words, the intensities of the first and second pulses of the second sequence are principally defined as for the first and second pulses of the first sequence.

However, the actual numerical values, particularly of durations and/or mean intensities, may differ between the first and second sequences. Accordingly, in a particularly preferred embodiment of the method according to the present invention, it is provided that the duration of the first pulse of the at least one second sequence of pulses differs from the duration of the first pulse of the first sequence of pulses.

In a particularly preferred embodiment of the method according to the present invention, it is provided that the duration of the first pulse of the at least one second sequence of pulses is greater than the duration of the first pulse of the first sequence of pulses. For example, the duration of the first pulse of the first sequence is 10 ms, the duration of the first pulse of the second sequence is 15 ms, and the duration of the first pulse of a subsequent second sequence is 20 ms.

An increasing duration of the first pulses of consecutive sequences is particularly suitable in cases where the microbubbles are generated intermittently and where more or less all microbubbles are collapsed during the first sequence. Accordingly, relatively more microbubbles are needed for the second sequences. The longer durations of the first pulses allow not only for a sufficient movement of the microbubbles, but also for enough time to create microbubbles during the at least one first pulse, wherein said creation can be done with the at least one first pulse itself (e.g. in cases of a supersaturated/oversaturated cleaning liquid as described above) or using other means, e.g. at least one Venturi nozzle, cf. above, or at least one Venturi nozzle with bubble pulverization (i.e. further mechanical milling of the microbubbles).

As mentioned above, the actual intensity does not need to be constant over the duration of the pulse. Accordingly, in a preferred embodiment of the method according to the present invention, it is provided that the at least one first pulse and/or the at least one second pulse is/are amplitude modulated. The pulses can thus be perfectly adjusted and shaped to specific needs. For example, the at least one first pulse can have a higher amplitude in an initial part of the duration of the first pulse and a lower amplitude in the remaining part of the duration of the first pulse, wherein the higher amplitude particularly fosters generation of microbubbles (e.g. when the cleaning fluid is a supersaturated/oversaturated liquid, cf. above) and the focus of the remaining part with the lower amplitude is on microbubble movement with lower or no creation of further microbubbles.

It should be mentioned that of course other ways of manipulating the pulses are possible too. For example, in a preferred embodiment of the method according to the present invention, it is provided that a phase change is applied during the first and/or the second pulse. Changing the phase causes changes in the turbulences in the cleaning fluid and changes the acoustic waves and/or nodes. This introduces additional shear stresses by means of additional oscillation intensities, additional microbubble collapse, additional acoustic flow, etc. In addition to that it has an advantageous influence on the bubble clustering, which gets reduced. The phase change during a pulse can be 180°, but also other, smaller values are possible. Moreover, the value of the phase change can be varied from pulse to pulse, particularly for corresponding pulses of different sequences.

Filling of the processing volume with the cleaning fluid, preferably containing the microbubbles, is easily realized, e.g. by pumping. Accordingly, in a preferred embodiment of the method according to the present invention, it is provided that cleaning fluid is pumped and/or drawn into the processing volume continuously or intermittently, preferably intermittently and after the first sequence of pulses.

Pumping can be realized with suitable pump elements that are known principally and can be configured as pressure pump, suction pump or double-acting pump, for example. Typically, these pump elements can be very small, allowing for small dimensions of the device that makes handling of the device easy for the user.

Pumping can be independent (e.g. continuous or intermittent the whole time) from or dependent (e.g. between two sequences, particularly only after the second pulse of each sequence and before the first pulse of the next sequence) on the actual stage of the actual sequence.

Pumping "new" cleaning fluid into the processing volume particularly makes possible to introduce cleaning fluid containing microbubbles, which is advantageous in cases where microbubbles are collapsed by the at least one second pulse of a sequence with at least another sequence to follow. The "old" cleaning fluid with less or no microbubbles can be discharged or left in the processing volume. In the latter case a mixture of old and new cleaning fluid is present in the processing volume.

As mentioned above the method can be used in various applications, wherein the surface to be cleaned can be an almost arbitrarily chosen surface. Accordingly, in a preferred embodiment of the method according to the present invention, it is provided that the at least one surface to be cleaned is at least one tooth surface and the cleaning fluid is a dentifrice fluid.

In practice, a convenient way to implement the method according to the present invention is to deploy an electronic control unit. Hence, according to the invention an electronic control unit is provided for use in a method for ultrasonic cleaning at least one surface to be cleaned, wherein the electronic control unit is configured to carry out a method according to the present invention. Accordingly, the electronic control unit is at least able to control means for generating and applying the ultrasound to the cleaning fluid in the processing volume, preferably to control at least one transducer.

The electronic control unit can be implemented as feedback controller, particularly with respect to regulating ultrasound frequencies and/or intensities, to account for e.g. the effect of temperature changes.

Preferably, the electronic control unit can also control a pump element for pumping the cleaning fluid into the processing volume continuously or intermittently.

Preferably, the electronic control unit can also control a microbubble unit for generating the microbubbles in the cleaning fluid, in order to provide for a certain size and/or a certain size distribution and/or a concentration in a certain range of the microbubbles in the cleaning fluid in the processing volume. Here, it is possible that the microbubbles are generated by means of the microbubble unit when the cleaning fluid is in the at least one processing volume. More preferably, the microbubble unit is designed for generating the microbubbles in the cleaning fluid with a certain initial size and/or a certain initial size distribution and/or an initial concentration in a certain range before the cleaning fluid enters the at least one processing volume.

In order to be able to clean a user's teeth particularly well, according to the present invention a device for cleaning at least in sections teeth and/or interdental areas and/or gingival areas of a user is provided, the device comprising an electronic control unit according to the present invention, the device further comprising at least one cleaning chamber element configured to confining the at least one processing volume together with the gum of the user and/or with at least one tooth surface region, each tooth surface region belonging to a tooth of the user and being adjacent to the gum line, and/or with at least one chewing surface belonging to the at least one tooth and/or with at least one tooth transition area adjacent to the at least one chewing surface, wherein the cleaning chamber element is designed such that tooth surface regions and/or chewing surfaces and/or tooth transition areas and/or interdental areas and/or gingival areas of several, preferably all, upper and/or lower teeth of the user can be attended by iteratively moving the cleaning chamber element to adjacent positions, the device further comprising at least one transducer for generating ultrasound, wherein the at least one transducer is configured to apply the ultrasound to a dentifrice fluid in the at least one processing volume such that ultrasound waves are directed toward the at least one tooth surface region and/or the at least one chewing surface and/or the at least one tooth transition area and/or at least one interdental area and/or at least one gingival area for producing a cleansing action of microbubbles in the dentifrice fluid on the at least one tooth surface region and/or the at least one chewing surface and/or the at least one tooth transition area and/or the at least one interdental area and/or the at least one gingival area, wherein the at least one cleaning chamber element is designed for contacting the gum of the user and/or the at least one tooth surface region and/or the at least one chewing surface and/or the at least one tooth transition area with at least one contact section, wherein the contact section is configured to substantially seal the at least one processing volume at least in the region of the gum and/or the at least one tooth surface region and/or the at least one chewing surface and/or the at least one tooth transition area such that the following is facilitated:
- filling of the processing volume with the dentifrice fluid and/or
- maintaining the processing volume with the dentifrice fluid with the microbubbles having a certain size and/or a certain size distribution and/or a concentration in a certain range.

As detailed above, said cleansing action is essentially free of inertial cavitation.

As discussed above, the microbubbles can be exclusively created before the dentifrice fluid is in the processing volume or can be exclusively or additionally created afterwards, using e.g. the above-detailed methods (particularly, based on an oversaturated dentifrice fluid or based on the deployment of at least one Venturi nozzle).

In principal, there can be more than one cleaning chamber element. It is also conceivable that several smaller cleaning chamber elements form together a bigger cleaning chamber element.

Typically, a tooth surface region is comprised by a buccal or lingual surface of a tooth, i.e. one tooth typically has two tooth surface regions that are arranged on opposing sides of the tooth.

Typically, a transition area connects a tooth surface region with the chewing surface of a tooth and is correspondingly arranged between the tooth surface region and the chewing surface.

The at least one gingival area is adjacent to the gumline and/or a tooth surface region and/or an interdental area.

"Designed" is to be understood not only with respect to a geometrical shape, but also to the actual dimensions.

Accordingly, the cleaning chamber element is not designed as mouthguard piece / mouthpiece for covering the whole upper and/or lower set of teeth of the user, thereby filling the user's oral cavity. Instead, the cleaning chamber element is designed as a comparatively small element which needs to be iteratively moved to adjacent positions (within the user's oral cavity), in order to attend all upper and/or lower teeth of the user. This means that with the device according to the present invention cleaning of all teeth and the entire dental surface, respectively, is done iteratively and not simultaneously.

The iterative movement of the cleaning chamber element can be continuous or intermittent.

In principle, the iterative movement can be realized manually or, preferably electrically, driven, particularly automatically controlled and driven. Therein the cleaning chamber element substantially determines the processing volume, i.e. the design of the cleaning chamber element substantially determines the design of the processing volume. Accordingly, during the intended use of the device according to the present invention the processing volume is not partially confined by all, but only by one or a few teeth of the user, more precisely by one or a few tooth surface regions and/or tooth transition areas and/or chewing surfaces.

Moreover, the processing volume can be partially confined by at least one further tooth area of at least one tooth, which further tooth area is typically disposed in the region of an interdental area and typically faces a further tooth area of an adjacent tooth. More precisely, each tooth has along its circumference two (opposing) tooth surface regions and two (opposing) further tooth areas, wherein along the tooth circumference each tooth surface region is followed by a further tooth surface area and vice versa.

Also, the processing volume can be partially confined by the gum, more precisely by a part of the gum.

Cleaning, i.e. removing plaque and/or biofilm from the teeth, particularly from the at least one tooth surface region and/or the at least one chewing surface and/or the at least one tooth transition area and/or the at least one interdental area and/or at least one gingival area, is achieved not only by the ultrasound waves as such, but by the ultrasound acting on the microbubbles as detailed above.

Note that the application of the ultrasound waves as described above is responsible for producing a cleansing action, which is essentially free of inertial (or transient) cavitation, since the used intensities are much lower than intensities enabling inertial cavitation. The resulting cleansing action is primarily based on the above described effects causing microbubble-induced shear stresses, which effects can occur in the course of so-called non-inertial cavitation, which can take place due to the used intensities.

On the one hand, this advantageously allows for rather low ultrasound intensities that are unproblematic from a safety
point of view (avoiding any damage to the user's bones and soft tissue), but are sufficiently high for acting upon the microbubbles as described above and hence for achieving optimum cleaning results.

In that a relatively small processing volume is realised due to the above-described design of the cleaning chamber element, all parameters relevant for a good cleaning result - e.g. frequency of the generated ultrasound and/or intensity of the generated ultrasound and/or amount of dentifrice fluid and/or microbubble sizes and/or microbubble distribution and/or microbubble concentration etc. - can be precisely controlled and maintained in the processing volume during the cleaning process. Accordingly, clinically effective cleaning results can be achieved reproducibly and independent from the actual position to which the cleaning chamber element has been moved.

It is noted that, except for the microbubbles, the dentifrice fluid can principally be a known oral care liquid, like an antiseptic mouthwash. More generally, except for the microbubbles, the dentifrice fluid can be a dentifrice or mouthwash or any other liquid or semi-liquid or gel-like or semi-solid carrier material, including water and saliva substitutes, suitable for delivery to the user's oral cavity.

Filling of the processing volume with dentifrice fluid is facilitated by sealing the processing volume, at least to some extent (i.e. sealing does not need to be perfect as described below in more detail).

Note that filling does not necessarily mean that the processing volume has to be filled completely full.

Particularly, if not all of the at least one tooth surface region, the at least one chewing surface, the at least one tooth transition area, the at least one interdental area and the at least one gingival area have to be cleaned simultaneously, excellent cleaning results can be achieved with the processing volume filled only to some extent.

Moreover, the sealing helps maintaining the dentifrice fluid including the microbubbles in the processing volume and, accordingly, cleaning can be carried out such that process parameters, particularly microbubble-related process parameters (e.g. size, distribution, concentration), can be kept within a certain range necessary for achieving an optimum cleansing action.

Perfect sealing is hindered in practice, for example due to different tooth geometries and/or interdental areas that cause leakage.

However, it turns out that an imperfect sealing is not necessarily a disadvantage: an imperfect sealing requires iterative, i.e. continuous or intermittent, filling or "refilling" of the processing volume, in order to account for fluid leaked out. Said refilling is not only easily established, but can also provide for "fresh" microbubbles in the processing volume if the dentifrice fluid contains the microbubbles already before entering the processing volume.

Even though maintaining the dentifrice fluid in the processing volume guarantees that the process parameters can be kept within a certain (relatively narrow) range, there will be slight changes of the parameters due to the above-described cleansing action caused by the ultrasound acting on the microbubbles, e.g. when microbubbles coalesce or collapse. In the mentioned example of using a dentifrice fluid containing the microbubbles already before entering the processing volume, the ideal parameters can then be re-established by the refilling of the processing volume with dentifrice fluid containing fresh microbubbles.

For the sake of completeness it is stated that the faster refilling is, the worse the sealing may be.

For the sake of completeness it is further mentioned that due to the "refilling" dentifrice fluid accumulates in the user's oral cavity in the course of the intended use of the device according to the present invention. Accordingly, the user spits out the used/accumulated dentifrice fluid at least once after the overall cleaning process, preferably of all teeth, is finished, wherein it is conceivable that used/accumulated dentifrice fluid is spit out at least once already in the course of the overall cleaning process too (i.e. also before the overall cleaning process is finished).

The sealing effect of the contact section can be established in a known manner. For example, the contact section can comprise one or more sealing lips and/or can be made of a material with advantageous sealing properties, e.g. of rubber or of a suitable plastic material or of silicone.

The invention will be explained in closer detail by reference to a preferred embodiment, with
- Fig. 1:: schematically showing a first sequence of pulses of ultrasound comprising a first pulse and a second pulse;
- Fig. 2:: schematically illustrating microbubbles in a cleaning fluid;
- Fig. 3:: schematically illustrating that those microbubbles that are shown in Fig. 2 are moved by the first pulse applied to the cleaning fluid;
- Fig. 4:: schematically illustrating the cleansing effect of the second pulse applied to the cleaning fluid with some of those microbubbles that are shown in Fig. 2 and Fig. 3 being collapsed;
- Fig. 5:: showing a schematic sectional view of a detail of an embodiment of a device according to the invention during intended use;
- Fig. 6:: illustrating schematically an interdental area;
- Fig. 7:: illustrating schematically a gingival area;
- Fig. 8:: showing a schematic perspective view illustrating the operation and mechanism of a drive unit of an embodiment of the device according to the invention.

The present invention refers to a method for ultrasonic cleaning at least one surface sc to be cleaned, comprising the following steps:
- providing a cleaning fluid 10 in at least one processing volume 2, wherein the cleaning fluid 10 contacts the surface sc to be cleaned, and wherein microbubbles 12 are contained and/or created in the cleaning fluid 10 in the at least one processing volume 2;
- generating ultrasound, preferably by means of at least one transducer 14, and applying the ultrasound to the cleaning fluid 10 in the processing volume 2, wherein the ultrasound application comprises a first sequence of pulses comprising at least one first pulse p1 with at least one first mean intensity and at least one second pulse p2, which is applied after the first pulse p1 and which has at least one second mean intensity,

wherein the first mean intensity is configured to create the microbubbles 12 in the cleaning fluid 10 and/or to move the microbubbles 12 in the cleaning fluid 10 toward the surface sc to be cleaned, and
wherein the second mean intensity is greater than the first
mean intensity and is configured to generate microbubble induced shear stresses, in order to produce a cleansing action of the microbubbles 12 on the surface sc to be cleaned.

It turns out that by way of this specific kind of ultrasound application the cleaning performance can be dramatically increased. The reason for the increased cleaning efficiency is that with the first pulse p1 the microbubbles 12 are specifically moved to the at least one surface sc to be cleaned, wherein the first pulse p1 has the lower mean intensity, which is sufficiently high to move the microbubbles 12, but low enough not to produce the cleansing action (although a cleansing action cannot be completely excluded).

This means that the microbubbles 12 stay in the cleaning fluid 10 during the first pulse p1 (in other words the first pulse p1 does not remove the microbubbles 12 from the cleaning fluid 10). When the second pulse p2, which has the higher mean intensity, acts on the microbubbles 12, the microbubbles 12 predominantly are in the region where the cleansing action is needed - and not elsewhere in the cleaning fluid 10, where no or only little cleansing action on the at least one surface sc to be cleaned can be effected.

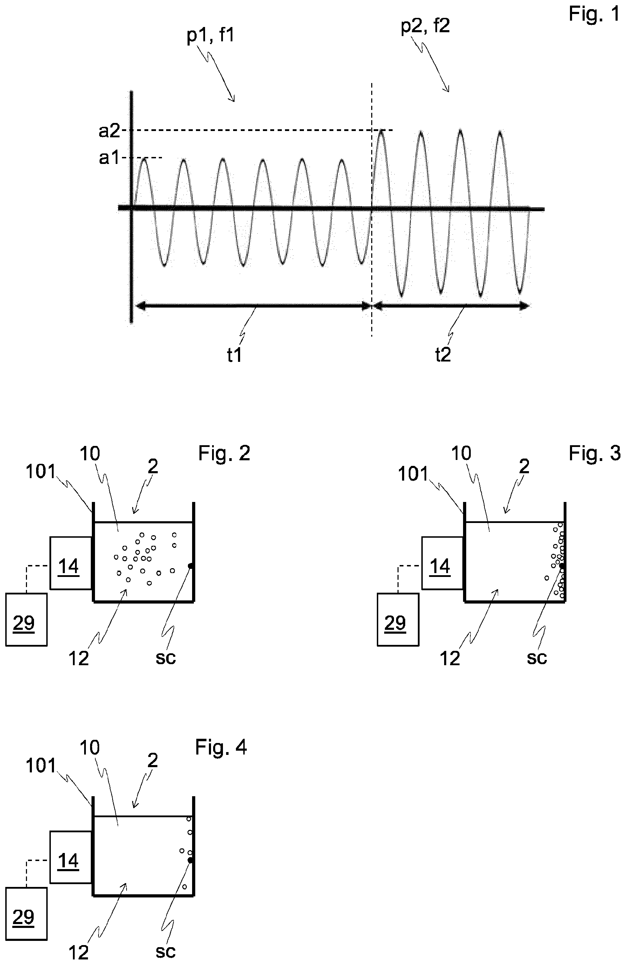

Fig. 1 illustrates an example of a corresponding first sequence of one first pulse p1 followed by one second pulse p2. The first pulse p1 has a constant amplitude a1 and the second pulse p2 has a constant amplitude a2 which is greater than amplitude a1. Accordingly the first mean intensity (which is proportional to the square of amplitude a1), averaged over a first duration t1 of the first pulse p1, is smaller than the second mean intensity (which is proportional to the square of amplitude a2), averaged over a second duration t2 of the second pulse p2. For example, the second mean intensity can be in the range of 1.5 to 150 times the first mean intensity.

For the sake of completeness it is noted that cases are possible with the at least one first pulse p1 and/or the at least one second pulse p2 being not constant, particularly being amplitude-modulated.

The method can be used in different applications, wherein the surface sc to be cleaned can be an almost arbitrarily chosen surface, e.g. at least a section of a tooth surface or at least a section of a (semiconductor) wafer surface.

In principle, the at least one processing volume 2 can be confined and/or defined and/or limited by one or more elements separate from the surface sc to be cleaned. Alternatively, the at least one processing volume 2 can also be confined and/or defined and/or limited at least in sections by the surface sc to be cleaned. Particularly, the surface sc to be cleaned can form a part, more particularly an inner wall, of a receptacle 101 into which the cleaning fluid 10 is introduced, like it is illustrated in Fig. 2. Hence, after the cleaning fluid 10 is introduced into said receptacle 101 or processing volume 2, the cleaning fluid 10 contacts the surface sc to be cleaned.

The microbubbles 12 can be deliberately contained in the cleaning fluid 10, i.e. already before the cleaning fluid 10 enters the at least one processing volume 2. Fig. 2 can be regarded as an illustration of such a case before any ultrasound is applied to the cleaning fluid 10, with the microbubbles 12 being distributed more or less over the whole cleaning fluid 10 in the processing volume 2.

Alternatively or additionally, the microbubbles 12 can be created when the cleaning fluid 10 is in the at least one processing volume 2. The latter can be accomplished, for example, using an oversaturated liquid as cleaning fluid 10,wherein the microbubbles 12 are created by the reduced pressure in the ultrasonic field, i.e. while the ultrasound is applied to the cleaning fluid 10 in the processing volume 2.

One example for such a cleaning fluid 10 is a liquid, particularly a water-based liquid, oversaturated with COz, wherein CO₂ microbubbles 12 can be created, e.g. by the at least one first pulse p1. Fig. 2 can also be regarded as an illustration of such a case during an initial stage of the first pulse p1. In said initial stage of the first pulse p1 the microbubbles 12 are created but essentially not yet moved by the first pulse p1, and the microbubbles 12 are hence distributed more or less over the whole cleaning fluid 10 in the processing volume 2.

In the shown example of Fig. 2 the ultrasound is generated by means of a transducer 14, which is controlled by means of an electronic control unit 29, wherein the electronic control unit 29 is configured to carry out the method according to the invention. The connection of the transducer 14 and the electronic control unit 29 is indicated by the dashed line.

In the shown embodiment the transducer 14 is used for both the generation/application of the first pulse p1 and for the generation/application of the second pulse p2. For the sake of completeness it is noted that cases are possible with different transducers 14 being used for the different pulses p1, p2.

For the sake of completeness it is further noted that the at least one transducer 14 and the electronic control unit 29 could also be integrated in a single unit.

The transducer 14 is arranged at the wall of the receptacle 101 outside of the receptacle 101 and the processing volume 2, wherein the transducer 14 is arranged opposite the surface sc. The ultrasound generated by the transducer 14 couples to the cleaning fluid 10 through the wall of the receptacle 101 and is directed toward the surface sc. Accordingly, the microbubbles 12 are moved toward the surface sc by the first pulse p1.

Fig. 3 illustrates the distribution of those microbubbles 12 that are present in Fig. 2 in the cleaning fluid 10 in the processing volume 2 in a final stage of the first pulse p1 or immediately after the first pulse p1. As can be seen, the duration t1 of the first pulse p1 acting on the microbubbles 12 has been chosen long enough, so that microbubbles 12 are distributed at or in the vicinity of the surface sc. Accordingly, when the second pulse p2, which follows in the shown example immediately after the first pulse p1, effects a cleansing action of these microbubbles 12, said cleansing action is localized essentially where it is needed, i.e. at 15 the surface sc to be cleaned.

As mentioned before the cleansing action is produced by shear stresses. The microbubble-induced shear stresses - at the desired position due to the first pulse p1 - are generated due to the second mean intensity of the second pulse p2 and stem from at least the following effects:
- The ultrasound generates acoustic streaming in the cleaning fluid 10, the strength of which is according to the second mean intensity sufficiently great to wash the microbubbles 12 away over the surface sc to be cleaned, thereby detaching biofilm / plaque / adhering particles from said surface sc.
- The microbubbles 12 are oscillated by the second pulse p2. These oscillations cause the cleaning fluid 10 close to the microbubbles 12 to move in a way which is known as "microstreaming", wherein the shear forces associated with said microstreaming generate a scrubbing action displacing or loosening biofilm/plaque and other adhering particles from the surface sc.
- The microbubbles 12 are collapsed, wherein pressure gradients are generated and microjets of the surrounding liquid fill the void which leads to shear forces that
   disrupt unwanted coatings / contaminants from the surface sc to be cleaned, allowing for, e.g. the disruption of biofilm / plaque / adhering particles at the surface sc.

Inertial cavitation can be excluded essentially, while non-inertial cavitation can account for the above-mentioned microbubble-induced shear stresses.

Due to the above-mentioned effects, particularly due to the collapsing of microbubbles 12, the number of microbubbles 12 is reduced by the action of the second pulse p2, typically. A reduced number of those microbubbles 12 that are shown in Fig. 2 and Fig. 3 is recognizable in Fig. 4 showing a snapshot immediately after the second pulse p2.

In the shown example of Fig. 1 the second duration t2 is smaller than the first duration t1, with t2 being about 66% of t1. It turns out that in this way (t2 < t1) particularly good cleansing results can be achieved while ensuring integrity of the surface sc to be cleaned. The latter holds because the surface sc to be cleaned is exposed to high intensity ultrasound only a relatively short time (second duration t2).

However, in this relatively short time, a large number of microbubbles 12 is in the vicinity of the surface sc to be cleaned and can thus perform said cleansing action, because the large number of microbubbles 12 has been given enough time (first duration t1) to be moved by the first pulse p1 toward the surface sc to be cleaned.

For the sake of completeness it is noted that also cases are possible with t2 = t1 or t2 > t1.

Typically, the first duration t1 and the second duration t2 can be in the range from 5 ms to 50 ms, particularly from 10 ms to 35 ms, each.

In Fig. 1 the second pulse p2 follows the first pulse p1 immediately, but in principle also, e.g. a pause in-between is possible, which pause can also be shorter or longer than or equal to the pulse durations t1, t2.

In the embodiment shown in Fig. 1 the first pulse p1 has a first frequency f1 and the second pulse p2 has a second frequency f2, wherein f1 = f2 holds. For the sake of completeness it is, however, noted that cases are possible where f1 ≠ f2 holds.

Generally, the frequencies f1, f2 on the one hand and the size of the microbubbles 12 (with diameters typically in the range from 1 µm to 500 µm) on the other hand, can be adjusted with respect to each other and with respect to the actual surface sc to be cleaned. One example, which is particularly suited for (semiconductor) wafer cleaning, comprises ultrasound frequencies f1, f2 in the range from 500 kHz to 3 MHz and microbubble sizes (diameters) in the range from 1 µm to 5 µm.

Naturally, in order to clean particularly thoroughly, several sequences with first pulses p1 and second pulses p2 can be applied consecutively.

Accordingly, the electronic control unit 29 can be configured to apply at least one second sequence of pulses to the cleaning fluid 10 in the at least one processing volume 2 after the first sequence of pulses, wherein the at least one second sequence of pulses comprises the at least one first pulse p1 and the at least one second pulse p2 after the first pulse p1.

As mentioned above, the method according to the present invention can not only be used for ultrasound cleaning of inanimate objects, but also for ultrasound cleaning of a user's teeth 9 and at least one tooth surface, respectively, wherein the tooth surface can refer to various sections of a user's tooth.

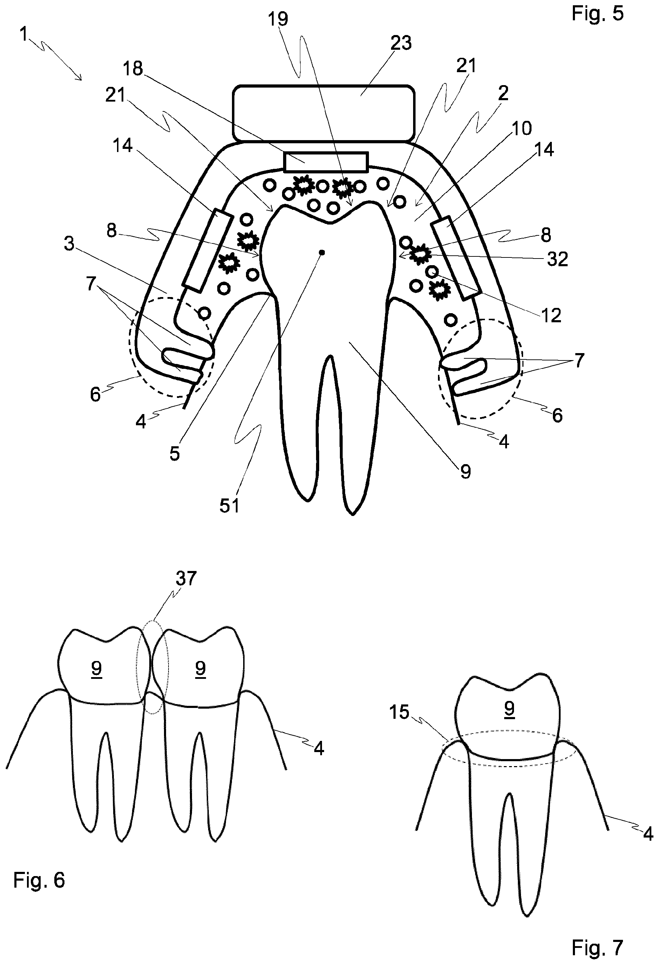

Accordingly, Fig. 5 shows a device 1 for cleaning at least in sections teeth 9 and/or interdental areas 37 and/or gingival areas 15 of a user, the device 1 comprising the electronic control unit 29.

The device 1 further comprises a cleaning chamber element 3 which is formed by a cushion element and configured to confining the at least one processing volume 2 together with the gum 4 of the user and/or with at least one tooth surface region 8, each tooth surface region 8 belonging to a tooth 9 of the user and being adjacent to the gum line 5, and/or with at least one chewing surface 19 belonging to the at least one tooth 9 and/or with at least one tooth transition area 21 adjacent to the at least one chewing surface 19.

Fig. 6 illustrates an interdental area 37 (indicated by the dashed line in Fig. 6) between two adjacent teeth 9.

Fig. 7 illustrates a gingival area 15 (indicated by the dashed line in Fig. 7) in the region of the gum 4 close to a tooth 9.

For the sake of completeness it is noted that each tooth 9 has along its circumference two (opposing) tooth surface regions 8 and two (opposing) further tooth areas 51, cf. Fig. 5, wherein along the tooth circumference each tooth surface region 8 is followed by a further tooth surface area 51 and vice versa. Naturally, the at least one processing volume 2 can be partially confined by the at least one further tooth area 51 as well.

In Fig. 5 one processing volume 2 is at least in sections confined by the cleaning chamber element 3 and by the gum 4 and by the tooth surface regions 8 (as well as by the tooth transition areas 21 and the chewing surface 19), wherein the design of the cleaning chamber element 3 is crucial for the actual shape, dimension and geometry of the processing volume 2.

The cleaning chamber element 3 is not designed as mouthguard piece / mouthpiece covering all teeth 9, but is designed as a comparatively small piece such that tooth surface regions 8 and/or chewing surfaces 19 and/or tooth transition areas 21 and/or interdental areas 37 and/or gingival areas 15 of several, preferably all, upper and/or lower teeth 9 of the user can be attended by (necessarily) iteratively moving the cleaning chamber element 3 to adjacent positions. Said iterative moving can be continuous or intermittent.

For facilitating moving the cleaning chamber element 3 along the whole dentition, the cleaning chamber 3 is connected to a moveable arm 23.

The device 1 further comprises transducers 14 for generating ultrasound, wherein the transducers 14 are configured to apply the ultrasound to the cleaning and dentifrice fluid 10, respectively, in the at least one processing volume 2 such that ultrasound waves are directed toward the at least one tooth surface region 8 and/or the at least one chewing surface 19 and/or the at least one tooth transition area 21 and/or at least one interdental area 37 and/or at least one gingival area 15 for producing a cleansing action of the microbubbles 12 in the dentifrice fluid 10 on the at least one tooth surface region 8 and/or the at least one chewing surface 19 and/or the at least one tooth transition area 21 and/or the at least one interdental area 37 and/or at least one gingival area 15.

As mentioned above, the microbubbles 12 can be contained in the dentifrice fluid 10 already before the dentifrice fluid 10 enters the processing volume 2. For example, this can be achieved by means of a microbubble unit (not shown) producing microbubbles 12 in the dentifrice fluid 10 with a certain initial size and/or a certain initial size distribution and/or an initial concentration in a certain range before the dentifrice fluid 10 enters the at least one processing volume 2, in order to provide for a certain size and/or a certain size distribution and/or a concentration in a certain range of the microbubbles 12 in the dentifrice fluid 10 in the processing volume 2. Typically, the initial concentration and/or the concentration is/are in the range of 0.01 vol.% to 15 vol.%, preferably in the range of 0.5 vol.% to 10 vol.%, more preferably in the range of 0.2 vol.% to 5 vol.%. Alternatively or additionally, the microbubbles 12 can also be created when the dentifrice fluid 10 is already in the at least one processing volume 2. For example, this can be achieved by virtue of the ultrasound acting on the dentifrice fluid 10, e.g. if the dentifrice fluid 10 is oversaturated with COz and COz microbubbles 12 are hence created by the reduced pressure in the ultrasonic field.

As mentioned above, when the ultrasound waves act upon the microbubbles 12, different effects can be produced that lead to shear forces that apply to biofilm / plaque / adhering particles ("adhering particles" particularly refer to bacteria colonies, wherein the latter can have different sizes and may grow to form a biofilm) on the surfaces to be cleaned, particularly on the at least one tooth surface region 8 and/or the at least one chewing surface 19 and/or the at least one tooth transition area 21 and/or the at least one interdental area 37 and/or the at least one gingival area 15, which shear forces detach the biofilm / plaque / adhering particles. Said effects comprise movement of microbubbles 12, resonating/oscillating the microbubbles 12 and collapsing the microbubbles 12, wherein collapsing microbubbles 32 are schematically illustrated in Fig. 5.

Apart from this cleansing action, the microbubbles 12 can also transport the detached particles away from the surfaces to be cleaned.

It is noted that the application of the ultrasound waves as described above is responsible for producing a cleansing action which is essentially free of inertial cavitation but which can comprise non-inertial cavitation. Correspondingly, rather low ultrasound intensities are used, which ultrasound intensities are unproblematic from a safety point of view (avoiding damage to soft tissue or excessive tissue heating), but are sufficiently high for acting upon the microbubbles 12 for generating the mentioned cleansing action based on microbubble-induced shear stresses. Preferably, said ultrasound intensities are in the range of 1 W/cm² to 30 W/cm², preferably 5-20 W/cm², more preferably 8-12 W/cm², which particularly holds for the at least one second mean intensity of the at least one second pulse p2.

In the embodiment shown in Fig. 5 the two transducers 14 that are provided are arranged opposite to each other, thus applying ultrasound from opposing sides to the tooth/teeth 9 arranged between the two transducers 14. Particularly, the two transducers 14 emit ultrasound toward opposing tooth surface regions 8 (buccal and lingual tooth surface regions 8) and tooth transition areas 21 (buccal and lingual tooth transition areas 21) and regions close to the gumline 5 comprising gingival areas 15 (cf. Fig. 7).

The cleaning chamber element 3 is designed for contacting the gum 4 of the user and/or the at least one tooth surface region 8 and/or the at least one chewing surface 19 and/or the at least one tooth transition area 21 with at least one contact section 6, wherein the contact section 6 is configured to substantially seal the at least one processing volume 2 at least in the region of the gum 4 nd/or the at least one tooth surface region 8 and/or the at least one chewing surface 19 and/or the at least one tooth transition area 21 such that the following is facilitated:
- filling of the processing volume 2 with the dentifrice fluid 10 and/or
- maintaining the processing volume 2 with the dentifrice fluid 10 with the microbubbles 12 having a certain size and/or a certain size distribution and/or a concentration in a certain range.

In Fig. 5 two contact sections 6 are provided, each having sealing lips 7 contacting the gum 4 during the intended use of the device 1. As a consequence one relatively large processing volume 2 is generated with parts on opposite sides of the tooth/teeth 9 being in fluid connection with each other.

The sealing lips 7 can be made of a material with advantageous sealing properties, e.g. of rubber or of a suitable plastic material or of silicone. In the shown embodiments the sealing lips 7 and the remaining cleaning chamber element 3 are made in one piece.

It is noted that filling does not necessarily mean that the processing volume 2 has to be filled completely full.

It is further noted that on the one hand perfect sealing is not required. On the other hand imperfect sealing requires iterative, i.e. continuous or intermittent, filling or "refilling" of the processing volume 2, in order to account for dentifrice fluid 10 leaked out. Said refilling is not only easily established, but can also provide for "fresh" microbubbles 12 in the processing volume 2 if the dentifrice fluid 10 contains the microbubbles 12 already before entering the processing volume 2, as preferably is the case in the embodiment shown in Fig. 5. Due to the "refilling" dentifrice fluid 10 accumulates in the user's oral cavity in the course of the intended use of the device 1. Accordingly, the user spits out the used/accumulated dentifrice fluid 10 at least
once after the overall cleaning process, preferably of all teeth 9, is finished, wherein it is conceivable that used/accumulated dentifrice fluid 10 is spit out at least once in the course of the overall cleaning process too (i.e. also 5 before the overall cleaning process is finished).

Generally, for filling/refilling the processing volume 2 a pump element (not shown) can be provided, which preferably can be controlled by the electronic control unit 29. With the pump element the cleaning and dentifrice fluid 10, respectively, is pumped and/or drawn into the processing volume 2 continuously or intermittently, preferably intermittently and after the first sequence of pulses.

The pump element can be integrated into the device 1.

In order to improve the cleansing action on the chewing surfaces 19, in the embodiment shown in Fig. 5 a further transducer 18 is provided for generating ultrasound, wherein the at least one further transducer 18 is configured to apply the ultrasound to the dentifrice fluid 10 in the processing volume 2 such that ultrasound waves are directed toward the at least one chewing surface 19 for producing a cleansing action of the microbubbles 12 on the at least one chewing surface 19. Accordingly, the chewing surfaces 19 are specifically targeted by means of the further transducer 18. The further transducer 18 is also controlled by the electronic control unit 29, i.e. the method according to the invention can be carried out with the further transducer 18 too.

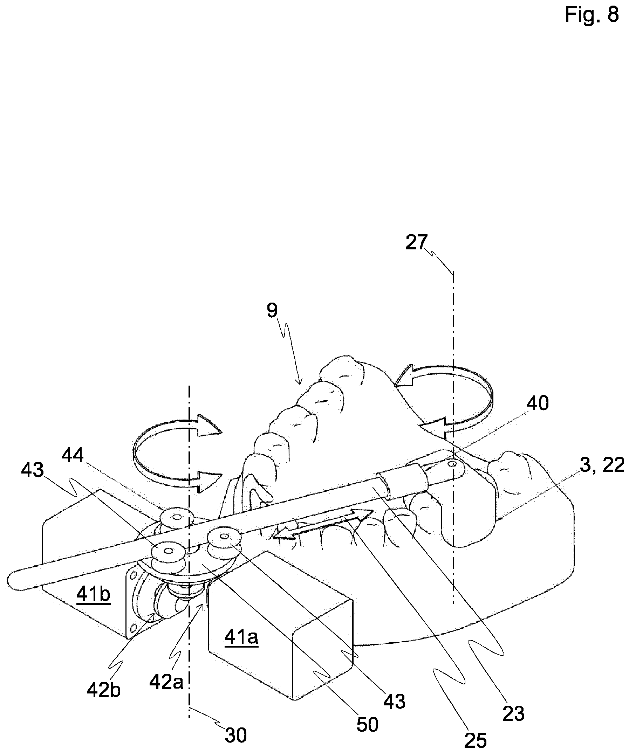

The two transducers 14 allow for speeding up the cleaning process, since simultaneous cleaning of opposing surfaces of the tooth/teeth 9 arranged between the two transducers 14 is enabled. At least these two transducers 14 are part of a shuttle unit 22 dedicated for the cleaning of the upper or lower teeth 9, cf. Fig. 8, wherein the shuttle unit 22 is mounted on the arm 23.

It is noted that for achieving a maximum cleaning efficiency and speed a second shuttle unit (not shown) can be provided, which also comprises at least two transducers arranged opposite each other for enabling simultaneous cleaning of opposing surfaces of the tooth/teeth 9 arranged in-between.

The second shuttle unit is dedicated for cleaning of the lower or upper teeth, i.e. both the upper and the lower teeth can be cleaned simultaneously by means of the two shuttle units. Accordingly, the second shuttle unit can be designed essentially like the first shuttle unit 22, but is symmetrically arranged upside-down with respect to the first shuttle unit 22.

Fig. 8 illustrates a possible mechanical implementation of a drive unit for moving the shuttle unit 22 on the arm 23 and the cleaning chamber element 3, respectively, along the user's dentition.

The drive unit comprises an electric motor 41a which can rotate a disc 50 via a gear transmission 42a. The rotation of the disc 50 is about a rotation axis 30 of the arm 23, since the arm 23 is mounted on the disc 50 such that its length axis runs through the rotation centre of the disc 50. This means that the arm 23 is rotated together with the disc 50 about the rotation axis 30.

The arm 23 is mounted on the disc 50 not in a fixed way, but by means of two guiding pulleys 43 and a driving pulley 44, wherein the arm 23 is arranged between the two guiding pulleys 43 on the one hand and the driving pulley 44 on the other hand. When the driving pulley 44 is rotated, the arm 23 is accordingly moved along its length axis and thus an arm length 25 (with which the arm 23 extends from the drive unit) is varied. The driving pulley 44 is driven by means of an electric motor 41b via a gear transmission 42b.

The electric motors 41a, 41b are controlled by the electronic control unit 29. This allows precisely combining the variation of the arm length 25 and the rotation of the arm 23 about its rotation axis 30 for moving the shuttle unit 22 at the free end of the arm 23 along the curved dentition of the user.

A driven rotation of the shuttle unit 22 about its rotation axis 27 can be provided in a known way, e.g. either by a small actuator mounted at the free end of the arm 23 or by a drive shaft feed through a channel (not shown) of the arm 23.

For the sake of completeness it is noted that the arm 23 can comprise at least one further channel (not shown) for providing a fluidic connection between a tank for the dentifrice fluid 10 and the pump element on the one hand and the cleaning chamber element 3 and the processing volume 2, 15 respectively, on the other hand. On the other hand, it is also possible not to drive the rotation of the shuttle unit 22, but just to have the shuttle unit 22 mounted at the arm 23 in a rotatable way, such that the rotation is caused by the user's teeth 9 pushing against the shuttle unit 22 when the latter is moved along the dentition. Optionally, a spring mechanism (not shown) can be provided, which pushes the shuttle unit 22 into a defined orientation about the rotation axis 27. Said defined orientation can be suited for cleaning the incisors, for example, and allows for a reliable and reproducible start configuration when the shuttle unit 22 is inserted into the user's oral cavity for initiating the cleaning process. In this case the teeth 9 push the shuttle unit 22 out of said defined orientation in the course of the movement of the shuttle unit 22 along the dentition, and the shuttle unit 22 returns into the defined orientation after the cleaning process.

For the sake of completeness it is mentioned that the electronic control unit 29 can also control further parameters influencing the cleaning process. In doing so, information from different sensors can be processed by the electronic control unit 29. For example, a force sensor 40 can be provided, cf. Fig. 8, for measuring the bite force of the user, wherein the force sensor 40 is connected to the electronic control unit 29 and wherein the electronic control unit 29 is configured to stop and/or prevent operation of the device 1 if the measured bite force is above a critical value.

### List of reference signs

- sc: Surface to be cleaned
- p1: First pulse
- p2: Second pulse
- a1: Amplitude of the first pulse
- a2: Amplitude of the second pulse
- t1: Duration of the first pulse
- t2: Duration of the second pulse
- f1: First frequency (of the first pulse)
- f2: Second frequency (of the second pulse)
- 1: Device for cleaning teeth
- 2: Processing volume
- 3: Cleaning chamber element
- 4: Gum
- 5: Gumline
- 6: Contact section
- 7: Sealing lips of the contact section
- 8: Tooth surface region
- 9: Tooth
- 10: Cleaning/dentifrice fluid
- 12: Microbubbles
- 14: Transducer
- 15: Gingival area
- 18: Further transducer
- 19: Chewing surface
- 21: Tooth transition area
- 22: Shuttle unit
- 23: Arm
- 25: Arm length
- 27: Rotation axis of the shuttle unit
- 29: Electronic control unit
- 30: Rotation axis of the arm
- 32: Collapsing microbubble
- 37: Interdental area
- 40: Force sensor
- 41a, 41b: Electric motor
- 42a, 42b: Gear transmission
- 43: Guiding pulley
- 44: Driving pulley
- 50: Disc
- 51: Further tooth area
- 101: Receptacle

## Claims

1. A method for ultrasonic cleaning at least one surface (sc) to be cleaned, comprising the following steps:
- providing a cleaning fluid (10) in at least one processing volume (2), wherein the cleaning fluid (10)
contacts the surface (sc) to be cleaned, and wherein microbubbles (12) are contained and/or created in the cleaning fluid (10) in the at least one processing volume (2);
- generating ultrasound, preferably by means of at least one transducer (14), and applying the ultrasound to the cleaning fluid (10) in the processing volume (2), wherein the ultrasound application comprises a first sequence of pulses comprising at least one first pulse (p1) with at least one first mean intensity and at least
one second pulse (p2), which is applied after the first pulse (p1) and which has at least one second mean intensity,
wherein the first mean intensity is configured to create the microbubbles (12) in the cleaning fluid (10) and/or to
move the microbubbles (12) in the cleaning fluid (10) toward the surface (sc) to be cleaned, and wherein the second mean intensity is greater than the first mean intensity and is configured to generate microbubble-induced shear stresses, in order to produce a
cleansing action of the microbubbles (12) on the surface (sc) to be cleaned.

2. The method according to claim 1, **characterised in that** the first pulse (p1) has a first duration (t1) and the second pulse (p2) has a second duration (t2), wherein the second
duration (t2) is smaller than the first duration (t1).

3. The method according to claim 2, **characterised in that** the second duration (t2) is in the range from 50% to 75% of the first duration (t1).

4. The method according to any one of claims 1 to 3, **characterised in that** the first pulse (p1) has a first duration (t1) and the second pulse (p2) has a second duration (t2), wherein the sum of the first duration (t1) and the second duration (t2) is in the range from 15 ms to 35 ms, preferably from 20 ms to 30 ms.

5. The method according to any one of claims 1 to 4, **characterised in that** the second pulse (p2) follows the first pulse (p1) immediately.

6. The method according to any one of claims 1 to 5, **characterised in that** the at least one first pulse (p1) has at least one first frequency (f1), the at least one second pulse (p2) has at least one second frequency (f2), wherein the first and second frequencies (f1, f2) differ.

7. The method according to any one of claims 1 to 6, **characterised in that** different transducers (14) are used for generating and applying the at least one first pulse (p1) on the one hand and for generating and applying the at least one second pulse (p2) on the other hand.

8. The method according to any one of claims 1 to 7, **characterised in that** after the first sequence of pulses at least one second sequence of pulses is generated and applied to the cleaning fluid (10) in the processing volume (2), wherein the at least one second sequence of pulses comprises the at least one first pulse (p1) and the at least one second pulse (p2) after the first pulse (p1).

9. The method according to claim 8, **characterised in that** the duration (t1) of the first pulse (p1) of the at least one second sequence of pulses differs from the duration (t1) of the first pulse (p1) of the first sequence of pulses.

10. The method according to claim 9, **characterised in that** the duration (t1) of the first pulse (p1) of the at least one second sequence of pulses is greater than the duration (t1) of the first pulse (p1) of the first sequence of pulses.

11. The method according to any one of claims 1 to 10, **characterised in that** the at least one first pulse (p1) and/or the at least one second pulse (p2) is/are amplitude-modulated.

12. The method according to any one of claims 1 to 11, **characterised in that** cleaning fluid (10) is pumped and/or drawn into the processing volume (2) continuously or intermittently, preferably intermittently and after the first sequence of pulses.

13. The method according to any one of claims 1 to 12, **characterised in that** the at least one surface (sc) to be cleaned is at least one tooth surface (8, 15, 19, 21, 37, 51) and the cleaning fluid (10) is a dentifrice fluid.

14. An electronic control unit (29) for use in a method for ultrasonic cleaning at least one surface (sc) to be cleaned, wherein the electronic control unit (29) is configured to carry out a method according to any one of claims 1 to 13.

15. A device (1) for cleaning at least in sections teeth and/or interdental areas and/or gingival areas of a user, the device (1) comprising an electronic control unit (29) according to claim 14, the device (1) further comprising at least one cleaning chamber element (3) configured to confining the at least one processing volume (2) together with the gum (4) of the user and/or with at least one tooth surface region (8), each tooth surface region (8) belonging to a tooth (9) of the user and being adjacent to the gum line (5), and/or with at least one chewing surface (19) belonging to the at least one tooth (9) and/or with at least one tooth transition area (21) adjacent to the at least one chewing surface (19), wherein the cleaning chamber element (3) is designed such that tooth surface regions (8) and/or chewing surfaces (19) and/or tooth transition areas (21) and/or interdental areas (37) and/or gingival areas (15) of several, preferably all, upper and/or lower teeth (9) of the user can be attended by iteratively moving the cleaning chamber element (3) to adjacent positions, the device (1) further comprising at least one transducer (14) for generating ultrasound, wherein the at least one transducer (14) is configured to apply the ultrasound to a dentifrice fluid (10) in the at least one processing volume (2) such that ultrasound waves are directed toward the at least one tooth surface region (8) and/or the at least one chewing surface (19) and/or the at least one tooth transition area (21) and/or at least one interdental area (37) and/or at least one gingival area (15) for producing a cleansing action of microbubbles (12) in the dentifrice fluid (10) on the at least one tooth surface region (8) and/or the at least one chewing surface (19) and/or the at least one tooth transition area (21) and/or the at least one interdental area (37) and/or at least one gingival area (15), wherein the at least one cleaning chamber element (3) is designed for contacting the gum (4) of the user and/or the at least one tooth surface region (8) and/or the at least one chewing surface (19) and/or the at least one tooth transition area (21) with at least one contact section (6), wherein the contact section (6) is configured to substantially seal the at least one processing volume (2) at least in the region of the gum (4) and/or the at least one tooth surface region (8) and/or the at least one chewing surface (19) and/or the at least one tooth transition area (21) such that the following is facilitated:
- filling of the processing volume (2) with the dentifrice fluid (10) and/or
- maintaining the processing volume (2) with the dentifrice fluid (10) with the microbubbles (12) having a certain size and/or a certain size distribution and/or a concentration in a certain range.
